(19) Europäisches Patentamt
European Patent Office
Office européen des brevets

(11) **EP 2 100 712 B1**

(12) **EUROPÄISCHE PATENTSCHRIFT**

(45) Veröffentlichungstag und Bekanntmachung des Hinweises auf die Patenterteilung:
**09.11.2016 Patentblatt 2016/45**

(51) Int Cl.:
*B29C 35/08* *(2006.01)*     *B29C 49/12* *(2006.01)*
*B29C 49/36* *(2006.01)*     *B29C 49/64* *(2006.01)*
*H05B 6/64* *(2006.01)*     *B29C 35/04* *(2006.01)*
*B29C 49/06* *(2006.01)*     *B29K 67/00* *(2006.01)*

(21) Anmeldenummer: **09154945.1**

(22) Anmeldetag: **12.03.2009**

(54) **Vorrichtung und Verfahren zum Erwärmen von Vorformlingen**

Device and method for heating preforms

Dispositif et procédé de chauffage de préforms

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **13.03.2008 DE 102008014215**

(43) Veröffentlichungstag der Anmeldung:
**16.09.2009 Patentblatt 2009/38**

(73) Patentinhaber: **Krones AG**
**93073 Neutraubling (DE)**

(72) Erfinder: **Senn, Konrad**
**93073 Neutraubling (DE)**

(74) Vertreter: **Bittner, Bernhard**
**Hannke Bittner & Partner**
**Patent- und Rechtsanwälte mbB**
**Prüfeninger Strasse 1**
**93049 Regensburg (DE)**

(56) Entgegenhaltungen:
**EP-A- 0 860 265**     **EP-A- 1 155 798**
**EP-A- 1 384 563**     **EP-A- 1 777 053**
**DE-A1- 19 633 467**     **JP-A- 9 295 342**
**US-A- 4 411 610**     **US-A- 4 795 871**

**Beschreibung**

Die vorliegende Erfindung ist auf eine Vorrichtung zum Erwärmen von Behältnissen und insbesondere von Vorformlingen gerichtet.

Im Stand der Technik ist man in jüngerer Zeit dazu übergegangen, an Stelle von Glasbehältnissen Kunststoffbehältnisse zu verwenden. Bei der Herstellung dieser Kunststoffbehältnisse werden Kunststoffvorformlinge verwendet, welche mittels Druckluft expandiert werden. Um diesen Expansionsprozess zu ermöglichen, beziehungsweise zu erleichtern, werden dabei die Vorformlinge üblicherweise durch eine Heizstrecke transportiert.

Aus der DE 30 20 150 A1 ist eine derartige Vorrichtung zum Vorwärmen von thermoplastischen Vorformlingen bekannt. Dabei wird zum Erwärmen der Vorformlinge Heißluft verwendet, um die Vorformlinge in ihrer Gänze und allen Teilen im Wesentlichen auf die gleichen Temperaturen vorzuwärmen.

Die EP 1 366 886 A1 beschreibt eine Vorheizeinrichtung für Vorformlinge.

Dabei soll in diesem Falle eine bestimmte Temperaturvarianz innerhalb des Vorformlings erreicht werden um auf diese Weise die Qualität des erzeugten Produktes zu erhöhen.

Aus der US 5,718,853 ist eine Vorrichtung zum Vorbehandeln von Behältnissen vor deren Erwärmung bekannt. Dabei soll erreicht werden, dass die von jedem Vorformling aufgenommene Wärmeenergie gleich ist und gleichförmig über den Vorformling verteilt ist.

Weiterhin ist aus dem internen Stand der Technik der Anmelderin bekannt, zur Erwärmung der Vorformlinge nicht Infrarotstrahlung einzusetzen sondern anstelle dessen oder gegebenenfalls zusätzlich Mikrowellenstrahlung. Der Einsatz von Mikrowellenstrahlung erlaubt eine schnellere Erwärmung der Vorformlinge.

Die EP 0 860 265 A1 beschreibt eine Vorrichtung nach dem Oberbegriff des Anspruchs 1 und ein Verfahren nach dem Oberbegriff des Anspruches 8.

Aufgrund der physikalischen Grundlagen ist bei einer Mikrowellenheizung eine Resonatorkavität nötig, sodass hier der Prozess nicht kontinuierlich wie bei einem Infraroterwärmungsprozess ablaufen kann, sondern es müssen einzelne Mikrowellenstationen verwendet werden. Um die Anzahl der benötigten Stationen möglichst klein zu halten, sollte dabei die Prozesszeit möglichst kurz gehalten werden. Die durch die Mikrowelle an das Material abgegebene Heizleistung ist proportional zum Quadrat des elektrischen Feldes und zum dielektrischen Verlustfaktor:

$$P_{Heiz} \; \propto \; \varepsilon'' \cdot E^2$$

Der vorliegenden Erfindung liegt die Aufgabe zu Grunde, die Effizienz von mikrowellenbasierten Heizeinrichtungen für Vorformlinge zu steigern.

Weiterhin soll der Durchsatz von derartigen Erwärmungsvorrichtungen erhöht werden.

Dies wird erfindungsgemäß durch eine Vorrichtung zum Erwärmen von Behältnissen nach Anspruch 1 und ein Verfahren zum Erwärmen von Behältnissen nach Anspruch 9 erreicht.

Vorteilhafte Ausführungsformen und Weiterbildungen sind Gegenstand der Unteransprüche.

Eine erfindungsgemäße Vorrichtung zum Erwärmen von Behältnissen und insbesondere von Vorformlingen weißt eine Mikrowellenerwärmungseinrichtung auf, welche einen Mikrowellenerzeuger und einen Mikrowellenleiter aufweist. Daneben weißt die Vorrichtung eine Transporteinrichtung auf, welche die Behältnisse transportiert. Erfindungsgemäß weißt die Vorrichtung eine weitere Erwärmungseinrichtung auf, welche die Behältnisse erwärmt, wobei die weitere Erwärmungseinrichtung eine Vorwärmeeinheit ist, welche in der Transportrichtung der Behältnisse stromaufwärts bezüglich der Mikrowellenerwärmungseinrichtung angeordnet ist. Unter einer Vorwärmeinheit wird dabei eine Erwärmungseinheit verstanden, die für sich allein genommen noch nicht die vollständige Erwärmung der Vorformlinge bewirkt sondern die Vorformlinge für eine anschließende Erwärmung vortemperiert.

Damit wird erfindungsgemäß vorgeschlagen, mit Hilfe der weiteren Erwärmungseinrichtung die Behältnisse vorzuwärmen um diese anschließend dem Erwärmungsprozess durch die Mikrowellenerzeugungseinheit zuzuführen. Wie oben erwähnt, hängt die von der Mikrowelle an das Material abgegebene Leistung auch von dem Verlustfaktor $\varepsilon''$ ab. Da das elektrische Feld der Mikrowelle nicht beliebig in die Höhe getrieben werden kann, da ansonsten die Gefahr einer Plasmazündung entsteht, wird erfindungsgemäß vorgeschlagen, die abgegebene Heizleistung über den dielektrischen Verlustfaktor zu erhöhen.

Dabei macht sich die Erfindung die Temperaturabhängigkeit des dielektrischen Verlustfaktors zu Nutze. In aufwendigen Untersuchungen wurde festgestellt, dass der dielektrische Verlustfaktor von PET in einem Temperaturbereich zwischen 10 und 100 Grad auf den etwa vierfachen Wert ansteigt. Durch eine Vortemperierung der Vorformlinge kann daher der Verlustfaktor erhöht werden und damit kann auch bei konstantem elektrischem Feld die Heizleistung entsprechend erhöht werden.

Vorzugsweise weist die Erwärmungseinrichtung eine Luftzuführungseinheit auf, welche die Behältnisse mit einem erwärmten Luftstrom beaufschlagt. Damit werden die Behältnisse hier insbesondere mit warmer Luft zur Vorwärmung beaufschlagt, um auf diese Weise die Effizienz der Mikrowellenerwärmungseinrichtung zu erhöhen. Vorzugsweise weist die Mikrowellenerwärmungseinrichtung einen Resonator auf.

Bei einer vorteilhaften Ausführungsform weist die Vorrichtung einen Wärmetauscher auf, der in wärmetauschender Verbindung mit der Mikrowellenerzeugungseinheit bzw. dem Mikrowellenerzeuger besteht. Bei der Mikrowellenerwärmung von Vorformlingen fällt Abwärme im Magnetron, das heißt der Mikrowellenquelle an, welche bei über 30% der Gesamtenergie liegt. Diese Wärmeenergie wird dabei üblicherweise von einem Kühlwasserkreislauf vom Magnetron abgeführt und im Stand der Technik über einen Wärmetauscher an die Umgebung abgegeben. Bei dieser bevorzugten Ausgestaltung wird vargeschlagen, auch diese Energie zu nutzen, um die PET-Vorformlinge zu wärmen. Auf diese Weise kann die Energieeffizienz der gesamten Vorrichtung erhöht werden. Weiter ist es möglich, die über den Wärmetauscher erwärmte Luft über zusätzliche Mittel weiter zu erwärmen, sodass ein Temperaturniveau erreicht wird, das über dem des Wärmetauschers liegt. Dies kann insbesondere deshalb sinnvoll sein, da jegliche Vorwärmung die weitere Behandelbarkeit mit Mikrowellenstrahlung positiv beeinflusst.

Weiterhin ist anzumerken, dass bei einer Mikrowellenheizung aufgrund der Geometrie der Vorformlinge die Innenseite stärker aufgeheizt wird als die Außenseite. Um diesen Temperaturgradienten zwischen der Außenwand und der Innenwand entgegenzuwirken ist die Erwärmungseinrichtung vorzugsweise so ausgestaltet, dass sie insbesondere die Außenseite der Vorformlinge erwärmt. Auf diese Weise kann vorab ein gegenläufiger Gradient auf den Vorformling aufgebracht werden so dass insgesamt eine gleichmäßige Erwärmung des Vorformlings erreicht werden kann, d. h. erreicht werden kann, dass sich die beiden Gradienten in etwa aufheben. Bei dieser Ausführungsform wird daher vorgeschlagen, dass die weitere Erwärmungseinrichtung derart ausgestaltet ist, dass primär eine Außenwandung der Behältnisse erwärmt wird, beispielsweise erwärmte Luft an die Außenwandung der Behältnisse geführt wird.

In einer weiteren vorteilhaften Ausführungsform ist die Erwärmungseinrichtung derart gestaltet, dass sie örtlich unterschiedliche Bereiche der Behältnisse in unterschiedlicher Weise mit Wärme beaufschlagt. Genauer gesagt kann hier in einer Einzelzuführung der Vorformling gezielt in bestimmten Zonen vorgewärmt werden. Bei der Erwärmung durch Mikrowellenstrahlung treten bestimmte Problemzonen auf wie beispielsweise die Kuppe im unteren Bereich des Vorformlings. Diese Problemzonen können verstärkt aufgeheizt werden wobei hingegen z. B. das Mundstück bzw. das Gewinde nicht erwärmt oder sogar gleichzeitig gekühlt werden kann. Auch ist es möglich, den Vorformling nur in bestimmten Zonen vorzuwärmen.

In einer weiteren vorteilhaften Ausführungsform weist die Vorrichtung eine Transportvorrichtung auf, wobei diese Transportvorrichtung wenigstens zwei unterschiedliche Temperaturzonen aufweist, in denen unterschiedliche Bereiche der Behältnisse unterschiedlich erwärmt werden. So können beispielsweise die Behältnisse durch einen Kanal geführt werden und innerhalb dieses Kanals können zwei unterschiedliche Temperaturzonen ausgebildet werden. Das Gewinde des Behältnisses kann dabei oberhalb dieses Kanals angeordnet sein. Auf diese Weise kann eine Erwärmung des Gewindes verhindert werden.

Durch diesen Transportkanal werden die Behältnisse hindurch transportiert, wobei dabei der Transportkanal durch Seitenwände und einen Boden definiert ist.

Vorzugsweise ist eine Abschirmungseinrichtung vorgesehen, welche verhindert, dass ein Gewindebereich der Behältnisse erwärmt wird. Der Gewindebereich der Behältnisse ist bei der Bearbeitung der Behältnisse sehr empfindlich, da eine zu starke Erwärmung zu einer Verformung desselben und in einer Folge einer Zerstörung des gesamten Vorformlings führen könnte.

Die vorliegende Erfindung ist weiterhin auf eine Anlage zum Expandieren von Vorformlingen zu Behältnissen mit einer Vorrichtung der oben beschriebenen Art und einer in einer Transportrichtung der Behältnisse nach der Vorrichtung angeordneten Blaseinrichtung, welche die Vorformlinge unter Verwendung von Druckluft zu Behältnissen expandiert, gerichtet. Dabei werden die von der oben beschriebenen Vorrichtung erwärmten Vorformlinge in Blasstationen im Rahmen eines Blasreckvorgangs zu Behältnissen expandiert. Zur Durchführung dieses Blasvorganges ist dabei eine geeignete Erwärmung der Behältnisse erforderlich. Bevorzugt ist die Vorrichtung zum Erwärmen der Behältnisse derart gestaltet, dass die zu erwärmenden Behältnisse zumindest abschnittsweise vereinzelt geführt und vereinzelt an die nachgeordnete Blaseinrichtung übergeben werden.

Die vorliegende Erfindung ist weiterhin auf ein Verfahren zum Erwärmen von Behältnissen insbesondere von Vorformlinge gerichtet, wobei die Behältnisse mittels einer ersten Transporteinrichtung transportiert und während dieses Transports zur Erwärmung von einer Mikrowellenerwärmungseinrichtung mit einer Mikrowellenstrahlung beaufschlagt werden. Erfindungsgemäß werden die Behältnisse vor der Beaufschlagung mit der Mikrowellenstrahlung mit Hilfe einer weiteren Erwärmungseinrichtung erwärmt.

Vorzugsweise nutzt die weitere Erwärmungseinrichtung zur Erwärmung der Behältnisse eine Abwärme der Mikrowellenerwärmungseinrichtung.

Bei einem weiteren vorteilhaften Verfahren werden unterschiedliche Bereiche der Behältnisse unterschiedlich von der weiteren Erwärmungseinrichtung erwärmt. Durch diese Vorgehensweise können, wie oben erwähnt, bestimmte Problemzonen der Behältnisse stärker erwärmt werden als andere, um auf diese Weise insgesamt eine gleichförmige Erwärmung durch die Mikrowelleneinrichtung zu erreichen.

Einem weiteren bevorzugtem Verfahren wird der zu erwärmende Bereich der Behältnisse kontinuierlich bewegt und oder erwärmt und insbesondere kontinuierlich gegenüber der Mikrowellenerwärmungseinrichtung bewegt. Vorzugsweise werden die Behältnisse vereinzelt gegenüber der weiteren Erwärmungseinrichtung geführt.

Vorzugsweise wird ein Bereich der Behältnisse nicht durch die Mikrowellenerwärmungseinrichtung erwärmt, wobei sich, wie oben erwähnt, besonders bevorzugt um einen Mündungs- bzw. Gewindebereich des Behältnisses handelt. Bevorzugt wird dieser Bereich auch nicht durch die weitere Erwärmungseinrichtung erwärmt bzw. gegenüber einer Erwärmung durch die Erwärmungseinrichtung abgeschirmt.

In einem weiteren bevorzugten Verfahren werden die Behältnisse während der Erwärmung durch die Mikrowellenerwärmungseinrichtung in einer senkrecht zu einer Längsachse der Behältnisse stehenden Richtung transportiert. Dies bedeutet, dass die Behältnisse vorzugsweise stehend transportiert werden.

In einem weiteren bevorzugten Verfahren erwärmt die Erwärmungseinrichtung einen mittleren Bereich der Behältnisse auf eine Temperatur, welche zwischen 40 und 60 Grad Celsius und bevorzugt zwischen 45 und 55 Grad Celsius liegt. Durch Vortemperieren von 15 Grad auf ca. 55 Grad Celsius wird der Verlustfaktor rund verdoppelt und daher verdoppelt sich, wie oben erwähnt, auch die Heizleistung ungefähr. Unter einem mittleren Bereich der Behältnisse wird insbesondere der Abschnitt zwischen dem Tragring und der Kuppe verstanden.

In einem weiteren bevorzugten Verfahren erwärmt die Erwärmungseinrichtung einen unteren Bereich der Behältnisse auf eine Temperatur, welche zwischen 50 Grad Celsius und 80 Grad Celsius und bevorzugt zwischen 60 Grad Celsius und 70 Grad Celsius liegt. Wie oben erwähnt, handelt es sich bei diesem unteren Bereich der Behältnisse um eine Problemzone, d. h. durch eine höhere Erwärmung der Kuppe wird insgesamt eine gleichmäßige Erwärmung durch die Mikrowellenerwärmungseinrichtung erreicht.

Weitere Vorteile und Ausführungsformen ergeben sich aus den beigefügten Zeichnungen:

Darin zeigen:

Fig. 1     eine Erwärmungsvorrichtung für Vorformlinge mit Mikrowellenerwärmungseinrichtungen;

Fig. 2     eine schematische Darstellung zur Veranschaulichung einer erfindungsgemäßen Vorrichtung zum Erwärmen von Behältnissen;

Fig. 3     ein Diagramm zur Veranschaulichung der Abhängigkeit zwischen dem dielektrischen Verlustfaktor und der Temperatur;

Fig. 4     eine Teilansicht einer Erwärmungseinrichtung für eine erfindungsgemäße Vorrichtung;

Fig. 5     eine Teilansicht einer weiteren Erwärmungseinrichtung für eine erfindungsgemäße Vorrichtung.

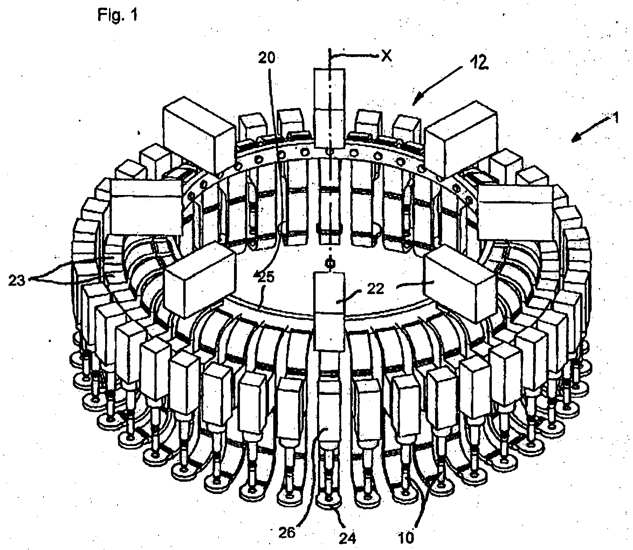

Fig. 1 zeigt eine kreisrunde Erwärmungsvorrichtung für Vorformlinge 10, wobei diese im Laufe der Erwärmung entlang des Umfangs der Erwärmungsvorrichtung d. h. hier auf einer Kreisbahn bewegt werden. Zu diesem Zweck ist eine in ihrer Gesamtheit mit 12 bezeichnete erste Transportvorrichtung vorgesehen. Die Erwärmungsvorrichtung weist einen Träger 25 auf, der gleichzeitig als Rechteckhohlleitung ausgebildet ist, also als Wellenleiter fungiert. An diesem Träger sind verschiedene Baueinheiten befestigt, wie z. B. 8 Mikrowellenerzeuger 22. Die an dem Träger befestigten Einheiten laufen gemeinsam um eine Maschinenachse X um.

Das Bezugszeichen 24 bezieht sich auf einen Resonator, den hier Teil der Mikrowellenerwärmungseinheit ist. Dieser Resonator 24 ist ein scheiben- bzw. plattenförmiges innen hohles Element, in dessen Mitte ein kreisrundes Loch angeordnet ist. Die Außenmäße dieses kreisrunden Loches sind so gewählt, dass jeweils zu erwärmender Vorformlinge hindurchgeführt werden können, wobei der Resonator 24 eine Höhe aufweist, die nur einem Teil der Höhe der Vorformlinge entspricht.

Das Bezugszeichen 26 bezieht sich auf eine Bewegungseinheit, mit der die Vorformlinge gegenüber dem Resonator bewegbar sind. Das Bezugszeichen 23 bezieht sich auf einen Mikrowellentuner, mit dessen Hilfe es durch eine Veränderung des Leiterraums der Mikrowellenerwärmungseinheit möglich ist, die Mikrowellen zu beeinflussen,

d. h. beispielsweise die Feldstärkenverteilung bei eingeführten Vorformlingen ist so zu optimieren, dass die reflektierte und nicht vom Vorformling absorbierte Energie in der Menge minimiert wird. Die in Fig. 1 gezeigte Vorrichtung wurde im Detail in der noch nicht offen gelegten deutschen Patentanmeldung Nr. [102007022386.4] der Anmelderin beschrieben, deren Offenbarungsgehalt hiermit durch Bezugsnahme voll umfänglich zur Offenbarung auch der vorliegenden Anmeldung gemacht wird.

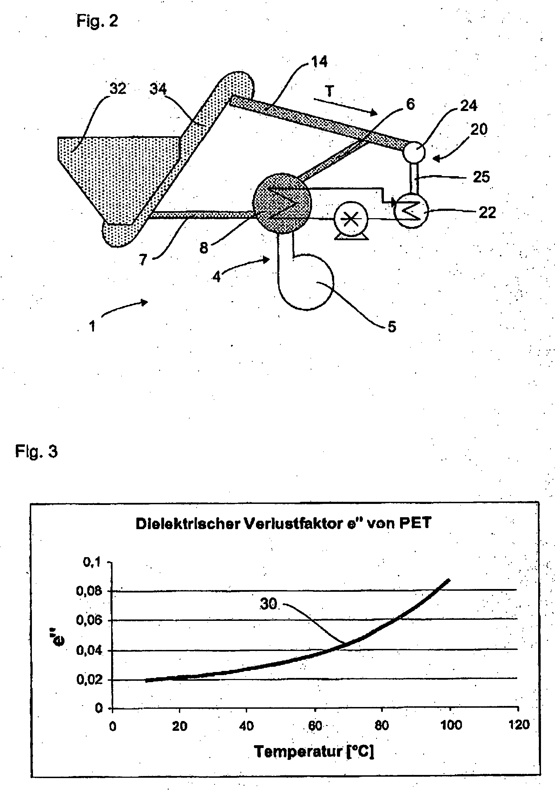

Fig. 2 zeigt eine schematische Darstellung einer erfindungsgemäßen Vorrichtung zur Veranschaulichung der Erfindung. Auch hier ist wiederum eine Mikrowellenwärmungseinheit 20 dargestellt, welche einen Resonator und einen Mikrowellenleiter 25 aufweist. Die Mikrowellenerwärmungseinheit 20 steht in einer wärmetauschenden Verbindung mit der in ihrer Gesamtheit 4 bezeichneten weiteren Erwärmungseinrichtung für die Behältnisse. Auf diese Weise wird die Abwärme der Mikrowellenerwärmungseinrichtung genutzt, um die Behältnisse vorzuwärmen. Genauer bezieht sich das Bezugszeichen 8 auf einen Wärmetauscher, mit dessen Hilfe erwärmte Luft erzeugt wird. Das Bezugszeichen 5 bezieht sich auf ein Gebläse, mit dem erwärmte Luft an die Behältnisse zugeführt werden kann.

Die in dem gesamten Mikrowellenprozess anfallende Wärme, d. h. insbesondere der Abwärme des Magnetrons, Wasserlast und Hohlleiterkühlung wird in einem Kühlwasserkreislauf gefasst und an den Wärmetauscher 8 geleitet. Dieser gibt die Wärme an einen von dem Ventilator bzw. Gebläse 5 erzeugten Luftstrom ab. Der Luftstrom überströmt nun die Vorformlinge, bevor sie mit der Mikrowellenerwärmungseinrichtung erhitzt werden. Dabei ist es möglich, die erwärmte Luft sowohl zu blasen als auch anzusaugen. Dabei ist es möglich, über eine Zuleitung 7 einer Schütte 32, in der die Vorformlinge angeordnet sind Wärme zuzuführen. Das Bezugszeichen 34 bezieht sich auf eine Transporteinrichtung wie ein Steigband, welches die Vorformlinge in einer weiteren Transportvorrichtung 14 zuführt. Auch in diesem Bereich kann einem Vorformling über eine Luftzuführungsleitung 6 erwärmte Luft zugeführt werden. In diesem Bereich ist es auch möglich, die schon vereinzelten Vorformlinge mit warmer Luft zu versorgen. Auch während des Transports auf dem Steigband 34 können die Behältnisse 10, ggfs. unter Verwendung einer weiteren (nicht gezeigten) Luftzuführungseinrichtung, erwärmt werden. Zusätzlich ist es möglich, der Luft über eine nicht gezeigte Zusatzeinrichtung zusätzliche Wärme zuzuführen. Dadurch erfolgt eine Erwärmung des Luftstromes über das Niveau des Wärmetauschers hinaus. So kann eine sehr effiziente Mikrowellenerwärmung gewährleistet werden.

Weiterhin wäre es auch möglich, eine speziell verlängerte Einzelzuführung für die Vorformlinge zu verwenden, in der sich die Vorformlinge länger befinden um auf diese Weise länger erwärmt zu werden. Dabei ist es, wie unten genauer erläutert wird, möglich, dass die erwärmte Luft unterschiedliche Temperaturen in unterschiedlichen Bereichen der Vorformlinge aufweist. Falls die Vorformlinge bereits in der Schütte 32 erwärmt werden, wird hierzu eine Warmluft mit einer Temperatur zwischen 25 Grad und 40 Grad Celsius, bevorzugt zwischen 25 und 35 Grad und besonders bevorzugt von ca. 30 Grad verwendet. Für die Erwärmung in der Transportverrichtung 14 kann Warmluft mit einer Temperatur von ca. 60 Grad verwendet werden.

Fig. 3 zeigt ein Diagramm zur Veranschaulichung der Abhängigkeit zwischen dem dielektrischen Verlustfaktore" von PET und der Temperatur. Man erkennt, dass der dielektrisch Verlustfaktor in einem Temperaturbereich zwischen 20 und 80 Grad ca. um den Faktor 3 ansteigt. Bereits eine Erwärmung der Vorformlinge auf ca. 60 Grad hat eine Verdoppelung des dielektrischen Verlustfaktors und damit der Wärmeabsorbation von PET zur Folge.

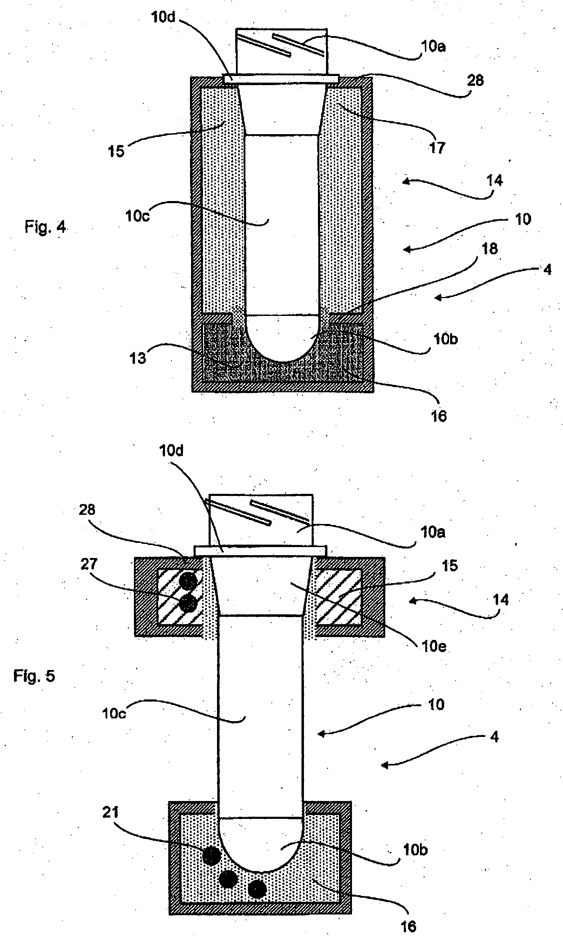

Fig. 4 zeigt nur eine Teilansicht der Erwärmungsvorrichtung 4, genauer gesagt einen Abschnitt der Transportvorrichtung 14. Bei dieser Ausführungsform weist die Transportvorrichtung 14 bei Temperaturzonen 16 und 17 auf, die innerhalb zweier Kammern bzw. Transportkanäle 15 und 13 gebildet werden. Dabei werden hier unterschiedliche Bereiche des Behältnisses 10 unterschiedlich erwärmt. So wird beispielsweise ein Boden bzw. Kuppenbereich 10b anders erwärmt, als der mittlere Bereich 10c des Behältnisses 10.

Es wäre auch möglich, dass die erwärmte Luft auch zum Transport bzw. zur Förderung der Vorformlinge verwendet wird bzw. die Transportvorrichtung 14 als Luftförderer ausgestaltet ist, oder dass die erwärmte Luft derart zugeführt wird, dass der Transport der Vorformlinge zumindest unterstützt wird.

Ein Tragring 10d des Behältnisses kann sich dabei an einer Außenwand bzw. Oberseite 28 der Transportvorrichtung 14 abstützen. Auf diese Weise ist es möglich, den Gewindebereich 10a des Vorformlings außerhalb der Transportvorrichtung zu führen und damit nicht zu erwärmen. Die Oberseite fungiert daher gleichzeitig als Abschirmvorrichtung. Damit befindet sich der Gewindebereich 10d in einer Temperaturumgebung auf Raumtemperatur. Auf diese Weise kann der Vorformling gezielt in bestimmten Zonen vorgewärmt werden. Hier wird verstärkt die Kuppe 10b, bei der es sich um eine Problemzone handelt, aufgewärmt, beispielsweise auf Temperaturen von ca. 65 Grad Celsius. Der mittlere Bereich 10c des Behältnisses kann bei dieser Ausführungsform des Behältnisses kann auf Temperaturen von 50 Grad erwärmt werden. Zusätzlich wäre es auch noch möglich, den Gewindebereich 10a zu kühlen, da er außerhalb der Transportvorrichtung 14 liegt.

Das Bezugszeichen 18 bezieht sich auf Stege, welche die beiden Temperaturzonen 16 und 17 voneinander abtrennen. So wird es möglich, die untere Temperaturzone 16 und die obere Temperaturzone 17, vorzugsweise mit unterschiedlichen Zuführleitungen, mit unterschiedlich warmer Luft zu versorgen.

Die Temperaturen zum Vorwärmen des Vorformlings sind vorzugsweise so hoch wie möglich, liegen aber vorzugsweise unter der Glastemperatur des Werkstoffs. Diese liegt bei PET in einem Bereich von ca. 70 - 75 Grad Celsius. Weiterhin sollte vor einem Vereinzeln der Vorformlinge in, der in Fig. 2 gezeigten Schütte die Temperatur nicht zu hoch sein, damit die Vorformlinge nicht aneinander kleben und dann der Vereinzelungsprozess behindert wird. Dabei ist, wie oben erwähnt, die Vorzugstemperatur in diesem Bereich zwischen 30 und 40° C. Weiterhin ist zu beachten, dass das Mundstück 10a und auch der Tragring 10d der Vorformlinge nicht über 50 Grad erwärmt werden sollten.

Fig. 5 zeigt eine weitere Ausführungsform der erfindungsgemäßen Vorrichtung. Bei dieser Ausführungsform werden in den Temperaturzonen 16 und 17 zusätzlich Infrarotstrahler 22 und 21 verwendet, welche eine zusätzliche Erwärmung des kritischen Kuppenbereichs 10b und eines Bereichs 10e unterhalb des Tragrings 10d bewirken. Mit Hilfe dieser zusätzlichen Infrarotstrahler bzw.

Infraroterwärmungseinheiten 21, 27 ist es möglich, in diesen Bereichen vorab oder nachträglich die Temperatur (nach oben) zu korrigieren.

**Patentansprüche**

1. Vorrichtung (1) zum Erwärmen von Vorformlingen (10) mit einer Mikrowellenerwärmungseinrichtung (20) zum Erwärmen der Vorformlinge, welche einen Mikrowellenerzeuger (22) und eine Mikrowellenleiter (25) aufweist, und mit einer Transporteinrichtung (12), welche die Vorformlinge (10) transportiert, wobei die Vorrichtung (1) eine weitere Erwärmungseinrichtung (4) aufweist, welche die Vorformlinge (10) erwärmt, wobei die weitere Erwärmungseinrichtung (4) eine Vorwärmeinheit ist, welche in der Transportrichtung der Vorformlinge (10) stromaufwärts bezüglich der Mikrowellenerwärmungseinrichtung (20) angeordnet ist, wobei die Erwärmungseinrichtung (4) eine Lüftzuführungseinheit (6,7) aufweist, welche die Vorformlinge (10) mit einem erwärmten Luftstrom beaufschlagt, **dadurch gekennzeichnet, dass** die weitere Erwärmungseinrichtung (4) derart ausgestaltet ist, dass primär eine Außenwandung der Vorformlinge über an eine Aussenwandung der Vorformlinge geführte Luft erwärmbar ist.

2. Vorrichtung (1) nach Anspruch 1, **dadurch gekennzeichnet, dass** die Vorrichtung (1) einen Wärmetauscher (8) aufweist, der in wärmetauschender Verbindung mit der Mikrowellenerzeugungseinrichtung (20) steht.

3. Vorrichtung (1) nach wenigstens einem der vorangegangenen Ansprüche, **dadurch gekennzeichnet, dass** die Erwärmungseinrichtung (4) derart gestaltet ist, dass sie örtlich unterschiedliche Bereiche der Vorformlinge (10) in unterschiedlicher Weise mit Wärme beaufschlagt.

4. Vorrichtung (1) nach wenigstens einem der vorangegangenen Ansprüche, **dadurch gekennzeichnet, dass** die Vorrichtung (1) eine Transportvorrichtung (14) aufweist, wobei diese Transportvorrichtung wenigstens zwei unterschiedliche Temperaturzonen (16,17) aufweist, in denen unterschiedliche Bereiche der Vorformlinge (10) unterschiedlich erwärmt werden.

5. Vorrichtung (1) nach wenigstens einem der vorangegangenen Ansprüche, **dadurch gekennzeichnet, dass** die Transportvorrichtung (14) einen Transportkanal (15) aufweist, durch welchen die Vorformlinge hindurch transportiert werden.

6. Vorrichtung (1) nach wenigstens einem der vorangegangenen Ansprüche, **dadurch gekennzeichnet, dass** eine Abschirmungseinrichtung (28) vorgesehen ist, welche verhindert, dass ein Gewindebereich (10c) der Vorformlinge (10) erwärmt wird.

7. Anlage zum Expandieren von Vorformlingen (10) zu Behältnissen mit einer Vorrichtung nach wenigstens einem der vorangegangenen Ansprüche und einer in einer Transportrichtung der Vorformlinge nach der Vorrichtung (1) angeordneten Blaseinrichtung, welche die Vorformlinge (10) unter Verwendung von Druckluft zu Behältnissen expandiert.

8. Verfahren zum Erwärmen von Vorformlingen (10), wobei die Vorformlinge (10) mittels einer ersten Transporteinrichtung (12) transportiert werden und während dieses Transports zur Erwärmung von einer Mikrowellenerwärmungseinrichtung (20) mit einer Mikrowellenstrahlung beaufschlagt werden, wobei die Vorformlinge (10) vor der Beaufschlagung mit der Mikrowellenstrahlung mit Hilfe einer weiteren Erwärmungseinrichtung (4) erwärmt werden, wobei die Erwärmungseinrichtung (4) eine Luftzuführungseinheit (6,7) aufweist, welche die Vorformlinge mit einem erwärmten Luftstrom beaufschlagt, **dadurch gekennzeichnet, dass** die weitere Erwärmungseinrichtung (4) primär eine Außenwandung der Vorformlinge über an eine Aussenwandung der Vorformlinge geführte Luft erwärmt.

9. Verfahren nach Anspruch 8, **dadurch gekennzeichnet, dass** die weitere Erwärmungseinrichtung (4) zur Erwärmung der Vorformlinge (10) eine Abwärme der Mikrowellenerwärmungseinrichtung (20) nutzt.

10. Verfahren nach wenigstens einem der vorangegangenen Ansprüche, **dadurch gekennzeichnet, dass** unterschiedliche Bereiche der Vorformlinge (10) unterschiedlich von der weiteren Erwärmungseinrichtung (4) erwärmt werden.

11. Verfahren nach wenigstens einem der vorangegangenen Ansprüche, **dadurch gekennzeichnet, dass** der zu erwärmende Bereich der Vorformlinge (10) kontinuierlich bewegt und/oder erwärmt wird.

12. Verfahren nach wenigstens einem der vorangegangenen Ansprüche, **dadurch gekennzeichnet, dass** ein Bereich der Vorformlinge (10) gegenüber einer Erwärmung durch die Erwärmungseinrichtung (4) abgeschirmt wird.

13. Verfahren nach wenigstens einem der vorangegangenen Ansprüche, **dadurch gekennzeichnet, dass** die Erwärmungseinrichtung (4) einen mittleren Bereich (10c) der Vorformlinge (10) auf eine Temperatur erwärmt, welche zwischen 40°C und 60°C und bevorzugt zwischen 45°C und 55°C liegt.

14. Verfahren nach wenigstens einem der vorangegangenen Ansprüche, **dadurch gekennzeichnet, dass** die Erwärmungseinrichtung (4) einen unteren Bereich (10b) der Vorformlinge (10) auf eine Temperatur erwärmt, welche zwischen 50°C und 80°C und bevorzugt zwischen 60°C und 70°C liegt.

## Claims

1. Device (1) for heating preforms (10), comprising a microwave heating device (20) for heating the preforms which has a microwave generator (22) and a microwave conductor (25), and comprising a transport device (12) which transports the preforms (10), wherein the device (1) comprises a further heating device (4) which heats the preforms (10), wherein the further heating device (4) is a pre-heating unit (4) which is arranged upstream of the microwave heating device (20) in the transport direction of the preforms (10), wherein the heating device (4) comprises an air supply unit (6, 7) which acts upon the preforms (10) with a heated air flow, **characterised in that** the further heating device (4) is designed in such a way that primarily an outer wall of the preforms can be heated by means of air guided towards an outer wall of the preforms.

2. Device (1) according to claim 1, **characterised in that** the device (1) comprises a heat exchanger (8) which is in heat-exchanging connection with the microwave generating unit (20).

3. Device (1) according to at least one of the preceding claims, **characterised in that** the heating device (4) is designed in such a way that it acts upon locally different regions of the preforms (10) with heat in different ways.

4. Device (1) according to at least one of the preceding claims, **characterised in that** the device (1) comprises a transport device (14), wherein this transport device has at least two different temperature zones (16, 17), in which different regions of the preforms (10) are heated differently.

5. Device (1) according to at least one of the preceding claims, **characterised in that** the transport device (14) has a transport channel (15), through which the preforms are transported.

6. Device (1) according to at least one of the preceding claims, **characterised in that** a screening device (28) is provided which prevents a threaded region (10c) of the preforms (10) from being heated.

7. Plant for expanding preforms (10) to form containers, comprising a device according to at least one of the preceding claims and a blowing device which is arranged after the device (1) in a transport direction of the preforms and which expands the preforms (10) using compressed air to form containers.

8. Method for heating preforms (10), wherein the preforms (10) are transported by means of a first transport device (12) and during this transport are acted upon with microwave radiation by a microwave heating device (20) for heating purposes, wherein the preforms (10) are heated by means of a further heating device (4) prior to being subjected to the microwave radiation, wherein the heating device (4) comprises an air supply unit (6, 7) which acts upon the preforms with a heated air flow, **characterised in that** the further heating device (4) primarily heats an outer wall of the preforms by means of air guided towards an outer wall of the preforms.

9. Method according to claim 8, **characterised in that** the further heating device (4) for heating the preforms (10) uses waste heat from the microwave heating device (20).

10. Method according to at least one of the preceding claims, **characterised in that** different regions of the preforms (10) are heated differently by the further heating device (4).

11. Method according to at least one of the preceding claims, **characterised in that** the region of the preforms (10) that is to be heated is continuously moved and/or heated.

12. Method according to at least one of the preceding claims, **characterised in that** a region of the preforms (10) is screened off to prevent heating by the heating device (4).

13. Method according to at least one of the preceding claims, **characterised in that** the heating device (4) heats a middle region (10c) of the preforms (10) to a temperature between 40°C and 60°C and preferably between 45°C and 55°C.

14. Method according to at least one of the preceding claims, **characterised in that** the heating device (4) heats a lower region (10b) of the preforms (10) to a temperature between 50°C and 80°C and preferably between 60°C and 70°C.

## Revendications

1. Dispositif (1) de chauffage de préformes (10), avec un dispositif de chauffage par micro-ondes (20) pour le chauffage des préformes, lequel comprend un générateur de micro-ondes (22) et un guide de micro-ondes (25), et avec un dispositif de transport (12) convoyant les préformes (10), ledit dispositif (1) comprenant un autre dispositif de chauffage (4) chauffant les préformes (10), ledit autre dispositif de chauffage (4) étant une unité de préchauffage située en amont du dispositif de chauffage par micro-ondes (20) dans la direction de transport des préformes (10), le dispositif de chauffage (4) comportant une unité d'amenée d'air (6, 7) soumettant les préformes (10) à un flux d'air chauffé, **caractérisé en ce que** l'autre dispositif de chauffage (4) est conçu de manière à permettre principalement le chauffage d'une paroi extérieure des préformes par l'air conduit contre une paroi extérieure des préformes.

2. Dispositif (1) selon la revendication 1, **caractérisé en ce que** ledit dispositif (1) comprend un échangeur de chaleur (8) en liaison d'échange de chaleur avec le dispositif de chauffage par micro-ondes (20).

3. Dispositif (1) selon au moins une des revendications précédentes, **caractérisé en ce que** le dispositif de chauffage (4) est conçu de manière à solliciter thermiquement de manière différenciée des parties localement différentes des préformes (10).

4. Dispositif (1) selon au moins une des revendications précédentes, **caractérisé en ce que** ledit dispositif (1) comprend un dispositif de transport (14), ledit dispositif de transport présentant au moins deux zones de température (16, 17) différentes, où des parties différentes des préformes (10) sont chauffées de manière différenciée.

5. Dispositif (1) selon au moins une des revendications précédentes, **caractérisé en ce que** le dispositif de transport (14) comprend un canal de transport (15) au travers duquel les préformes sont transportées.

6. Dispositif (1) selon au moins une des revendications précédentes, **caractérisé en ce qu'**un dispositif de protection (28) est prévu, lequel empêche qu'une partie filetée (10c) des préformes (10) soit chauffée.

7. Installation pour l'expansion de préformes (10) pour obtenir des récipients, avec un dispositif selon au moins une des revendications précédentes et un dispositif de soufflage situé en aval du dispositif (1) dans la direction de transport des préformes et qui gonfle les préformes (10) au moyen d'air comprimé pour obtenir des récipients.

8. Procédé de chauffage de préformes (10), lesdites préformes (10) étant convoyées au moyen d'un premier dispositif de transport (12) et soumises pendant ce transport à un rayonnement micro-ondes pour chauffage par un dispositif de chauffage par micro-ondes (20), les préformes (10) étant chauffées au moyen d'un autre dispositif de chauffage (4) avant d'être soumises au rayonnement micro-ondes, le dispositif de chauffage (4) comportant une unité d'amenée d'air (6, 7) soumettant les préformes à un flux d'air chauffé, **caractérisé en ce que** ledit autre dispositif de chauffage (4) principalement procède au chauffage d'une paroi extérieure des préformes par l'air conduit contre une paroi extérieure des préformes.

9. Procédé selon la revendication 8, **caractérisé en ce que**, pour le chauffage des préformes (10), l'autre dispositif de chauffage (4) utilise une chaleur dégagée par le dispositif de chauffage par micro-ondes (20).

10. Procédé selon au moins une des revendications précédentes, **caractérisé en ce que** des différentes parties des préformes (10) sont chauffées de manière différenciée par l'autre dispositif de chauffage (4).

11. Procédé selon au moins une des revendications précédentes, **caractérisé en ce que** la partie des préformes (10) à chauffer est déplacée et/ou chauffée de manière continue.

12. Procédé selon au moins une des revendications précédentes, **caractérisé en ce qu'**une partie des préformes (10) est protégée contre un chauffage par le dispositif de chauffage (4).

13. Procédé selon au moins une des revendications précédentes, **caractérisé en ce que** le dispositif de chauffage (4) chauffe une partie centrale (10c) des préformes (10) à une température comprise entre 40 °C et 60 °C, préférentiellement entre 45 °C et 55 °C.

14. Procédé selon au moins une des revendications précédentes, **caractérisé en ce que** le dispositif de chauffage (4) chauffe une partie inférieure (10b) des préformes (10) à une température comprise entre 50 °C et 80 °C, préférentiellement entre 60 °C et 70 °C.

Fig. 1

Fig. 2

Fig. 3

Dielektrischer Verlustfaktor e" von PET

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3020150 A1
- EP 1366886 A1
- US 5718853 A
- EP 0860265 A1
- DE 102007022386